# EUROPEAN PATENT SPECIFICATION

(11) **EP 1 181 497 B1**
(45) Date of publication and mention of the grant of the patent: **10.11.2004**
(21) Application number: 00919233.7
(22) Date of filing: 29.03.2000
(51) Int. Cl.: F42B 12/70, F41H 11/02, B64D 1/02

(54) **METHOD FOR PRODUCING AN ARRANGEMENT FOR STORING AND LAUNCHING COUNTER-MEASURES, AND ARRANGEMENT FOR STORING AND LAUNCHING COUNTER-MEASURES**
VERFAHREN ZUM LAGERN UND ABSCHIESSEN VON DÜPPELN UND VORRICHTUNG ZUM LAGERN SOLCHER DÜPPEL
PROCEDE DE PRODUCTION D'UN DISPOSITIF POUR LE STOCKAGE ET LE LANCEMENT DE CONTRE-MESURES, ET DISPOSITIF POUR STOCKER ET LANCER DES CONTRE-MESURES

(30) Priority: 01.04.1999 SE 9901214
(43) Date of publication of application: 27.02.2002
(73) Proprietor: SaabTech Electronics Aktiebolag, 175 88 Järfälla (SE)
(72) Inventor: SALIB, Ramses, S-170 77 Solna (SE)
(74) Representative: Falk, Bengt
(86) International application number: PCT/SE2000/000610
(87) International publication number: WO 2000/060303

(56) References cited:
- SE-B- 419 899
- SE-C2- 501 881
- US-A- 4 134 115

## Description

The present invention relates to a method for producing an arrangement for storing and launching counter-measures, such as flares and chaff, comprising an elongate body with compartments for counter-measures and means for feeding firing signals to the counter-measures in the compartments and for communication with the aircraft on which the arrangement is intended to be mounted. The invention also relates to an arrangement for storing and firing counter-measures, such as flares and chaff, comprising an elongate body with compartments for counter-measures and means for feeding firing signals to the counter-measures in the compartments and for communication with the aircraft or the like on which the arrangement is intended to be mounted. Counter-measures can include passive measures, such as chaff foil or metal-coated glass fibres, but can also include flares, for example IR flares, or other active measures.

Arrangements for storing and launching counter-measures, so-called dispensers, have been produced, in accordance with previously known manufacturing principles, starting from a metal plate which has been bent to form an inner chassis. The inner chassis has then been coated with foamed plastic, for example, to give it its final external contour. This production method involves a number of demanding work stages before the final external shape is obtained. The length of the dispenser must also be able to be adapted to the type of aircraft on which the dispenser is to be mounted. This adaptation to a large number of different lengths is an expensive process in the known production method and is both time-consuming and results in a large amount of material wastage.

The object of the present invention is to make available a method which results in the production of the arrangement requiring less labour, permits simple adjustment of length and minimizes material consumption and material wastage, and also an arrangement produced in accordance with the principles of this method.

The object of the invention is achieved by means of a method which is characterized in that:
a) a beam with an essentially H-shaped profile is shaped to a suitable length by extrusion starting from an extrudable material, the H-shaped projectile being extruded either directly or as two essentially symmetrical T-shaped profiles which, after extrusion, are joined together to form an H-shaped profile,
b) a nose is arranged at one end of the beam,
c) a tail is arranged at the other end of the beam,
d) compartments for storing counter-measures are arranged in one opening of the H-shaped profile,
e) means for feeding firing signals to the counter-measures in the compartments and for communication with the aircraft are arranged in the other opening of the H-shaped profile.

An arrangement produced in accordance with the principles of the above method is characterized in that the arrangement comprises a beam formed by extrusion of an extrudable material and with an essentially H-shaped profile, with a first opening delimited by first and second opposite side walls and a bottom section, and a second opposite opening delimited by third and fourth opposite side walls and the bottom section common to the first opening, a nose arranged at one end of the beam, and a tail arranged at the other end of the beam, which beam comprises, in the first opening of the H-shaped profile, a plurality of compartments for storing counter-measures, and which beam, in the other opening of the H-shaped profile intended to be arranged on the aircraft or the like, comprises means for feeding firing signals to the counter-measures in the compartments and for communication with the aircraft.

By forming a beam of H-shaped profile by means of extrusion, the length of the dispenser can in principle be determined individually without the slightest material wastage. After a single production stage, the shaped beam is ready with both inner and outer limit surfaces.

Examples of suitable materials to be used for extrusion are metal materials such as aluminium. Other light metals or other metals or metal combinations, for example steel, can also be used.

The openings of the H-shaped profile can be easily adapted to the demands in respect of, for example, stiffness, adaptation to the equipment which is to be mounted in the openings, for example magazines, etc.

According to one advantageous embodiment, at least parts of the first and second side walls of the first opening are doubled.

According to another advantageous embodiment, the first and second side walls of the first opening comprise shoulders arranged projecting towards each other.

According to a further advantageous embodiment, the common bottom section of the first and second openings is designed with double walls.

The invention will be described in greater detail below on the basis of illustrative embodiments and with reference to the attached drawings, in which:
Figure 1 shows an exploded perspective view of a dispenser arrangement produced in accordance with the principles of the method according to the invention.
Figures 2 to 6 show examples of five different proposed profile shapes.

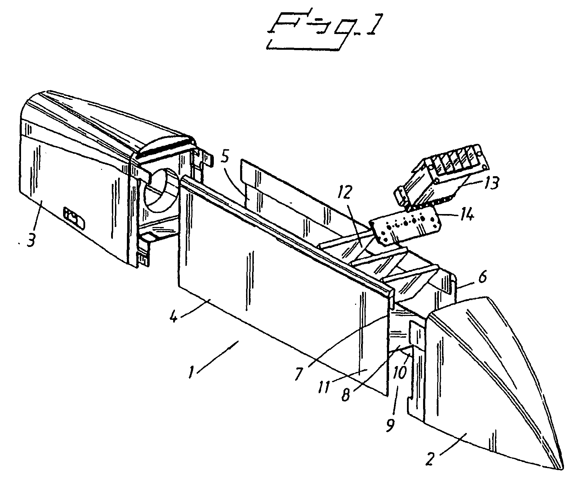

The dispenser arrangement 1 shown in Figure 1 comprises a front part in the form of a nose 2, a rear part in the form of a tail 3 and a middle part in the form of a beam 4 with an H profile. The beam 4 with the H-shaped profile has a first opening 5 with side walls 6, 7 and a bottom section 8. The beam also has a second opening 9 with two opposite side walls 10, 11 and with a bottom section 8 common to the first opening. The first opening is intended to accommodate a number of compartments, of which one is shown separately and designated by reference number 12. A magazine 13 with connection plate 14 is designed to be mounted in each of the compartments of the first opening. No elements have been shown in the other opening 9 of the beam 4, although it is possible to have cables here for connecting the magazine to the aircraft on which the dispenser is mounted. The second opening can also accommodate electronic circuits or the like which it may be desirable to place outside the aircraft body.

The beam 4 with the H-shaped profile is formed to a suitable length by extrusion starting from a metal. The nose 2 is then arranged on one end and the tail 3 at the other end of the beam 4. Compartments 12 for storing counter-measures are also mounted in the first opening 5, and necessary means for feeding firing signals to the counter-measures and for communication with the aircraft are mounted in the other opening 9.

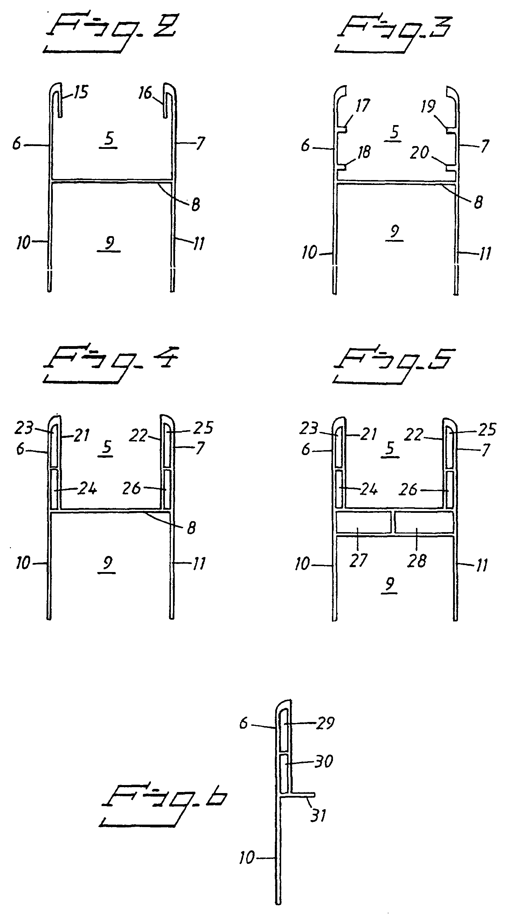

Figure 2 shows an H-profile shape in which the longitudinal direction of the beam 4 essentially corresponds to the beam according to Figure 1. The first opening 5 is designed with side walls 6 and 7 which are partially doubled by wall sections 15, 16.

According to the H-profile shape proposed as an alternative in Figure 3, the side walls 6, 7 have been provided with projecting shoulders 17, 18, 19, 20.

According to the embodiment illustrated in Figure 4, the side walls delimiting the first opening 5 have been doubled entirely by wall sections 21, 22 so that air pockets 23, 24, 25, 26 have been formed.

Figure 5 shows an example in which the bottom section 8 has also been designed with air pockets 27, 28.

Figure 6 shows a T-shaped profile with air pockets 29, 30. By joining two T-shaped profiles of the type shown in Figure 6, an H-shaped profile is obtained. To join the two T-shaped profiles, a flat oblong plate (not shown) can be used which is riveted, bonded or otherwise connected to the leg 31 of the two T-shaped profiles which are intended to form the H shape.

The invention is not limited to the illustrative embodiments described above, but can be modified within the scope of the attached patent claims and the inventive concept.

## Claims

1. Method for producing an arrangement for storing and launching counter-measures, such as flares and chaff, comprising an elongate body with compartments for counter-measures and means for feeding firing signals to the counter-measures in the compartments and for communication with the aircraft on which the arrangement is intended to be mounted, **characterized in that**:
a) a beam with an essentially H-shaped profile is shaped to a suitable length by extrusion starting from an extrudable material, the H-shaped projectile being extruded either directly or as two essentially symmetrical T-shaped profiles which, after extrusion, are joined together to form an H-shaped profile,
b) a nose is arranged at one end of the beam,
c) a tail is arranged at the other end of the beam,
d) compartments for storing counter-measures are arranged in one opening of the H-shaped profile,
e) means for feeding firing signals to the counter-measures in the compartments and for communication with the aircraft are arranged in the other opening of the H-shaped profile.

2. Method according to Patent Claim 1, **characterized in that** the beam is formed by extrusion starting from a metal, for example aluminium.

3. Arrangement for storing and launching counter-measures, such as flares and chaff, comprising an elongate body with compartments for counter-measures and means for feeding firing signals to the counter-measures in the compartments and for communication with the aircraft or the like on which the arrangement is intended to be mounted, **characterized in that** the arrangement comprises a beam formed by extrusion of an extrudable material and with an essentially H-shaped profile, with a first opening delimited by first and second opposite side walls and a bottom section, and a second opposite opening delimited by third and fourth opposite side walls and the bottom section common to the first opening, a nose arranged at one end of the beam, and a tail arranged at the other end of the beam, which beam comprises, in the first opening of the H-shaped profile, a plurality of compartments for storing counter-measures, and which beam, in the other opening of the H-shaped profile intended to be mounted on the aircraft or the like, comprises means for feeding firing signals to the counter-measures in the compartments and for communication with the aircraft.

4. Arrangement according to Patent Claim 3, **characterized in that** at least parts of the first and second side walls of the first opening are doubled.

5. Arrangement according to either of Patent Claims 3 and 4, **characterized in that** the first and second side walls of the first opening comprise shoulders arranged projecting towards each other.

6. Arrangement according to any of Patent Claims 3 to 5, **characterized in that** the common bottom section of the first and second openings is designed with double walls.

## Patentansprüche

1. Verfahren zur Herstellung einer Anordnung zum Unterbringen und Abschießen von Störmitteln , wie Düppeln und Chaff, mit einem langgestreckten Gehäuse mit Kammern für Störmittel und Mitteln zum Zuführen von Abschusssignalen zu den Störmitteln in den Kammern und für die Kommunikation mit dem Flugzeug, an welchem die Anordnung angebracht werden soll, **dadurch gekennzeichnet, dass**:
a) ein Träger mit im wesentlichen H-förmigen Profil in geeigneter Länge durch Extrusion, ausgehend von einem extrudierbaren Material, geformt wird, wobei das H-förmige Profil entweder direkt extrudiert wird oder in Form von zwei im wesentlichen symmetrischen T-förmigen Profilen, die nach dem Extrudieren zur Bildung des H-förmigen Profils miteinander verbunden werden,
b) eine Spitze wird an einem Ende des Trägers angesetzt;
c) ein Heck wird am anderen Ende des Trägers angesetzt,
d) Kammern für die Unterbringung von Störmitteln werden in einer Öffnung des H-förmigen Profils angeordnet,
e) Mittel zum Zuführen von Abschiesssignalen zu den Störmitteln in den Kammern und zur Kommunikation mit dem Flugzeug werden in der anderen Öffnung des H-förmigen Profils angeordnet.

2. Verfahren nach Anspruch 1, **dadurch gekennzeichnet, dass** der Träger druch Extrusion aus einem Metall, zum Beispiel Aluminium, geformt wird.

3. Anordnung zum Unterbringen und Abschiessen von Störmitteln, wie Düppeln und Chaff, mit einem lang gestreckten Gehäuse mit Kammern für Störmittel und Mitteln zum Zufuhren von Abschusssignalen zu den Störmitteln in den Kammern und zur Kommunikation mit dem Flugzeug oder dergleichen, an dem die Anordnung angebracht werden soll, **dadurch gekennzeichnet, dass** die Anordnung einen Träger umfasst, der durch Extrusion aus einen extrudierbaren Material und mit im wesentlichen H-förmigem Profil geformt ist, mit einer ersten Öffnung, die durch einander gegenüberliegende erste und zweite Seitenwände und einen Bodenabschnitt begrenzt wird, und einer zweiten gegenüberliegenden Öffnung, die durch einander gegenüberliegende dritte und vierte Seitenwände und den mit der ersten Öffnung gemeinsamen Bodenabschnitt begrenzt wird, eine an einem Ende des Trägers angesetzte Spitze und ein an dem anderen Ende angesetztes Heck, wobei der Träger in der ersten Öffnung des H-förmigen Profils eine Vielzahl von Klammern zum Unterbringen von Störmitteln aufweist, und wobei der Träger in der anderen Öffnung des H-förmigen Profils, das an dem Flugzeug oder der gleichen angebracht werden soll, Mittel zum Zuführen von Abschiesssignalen zu den Störmitteln in den Kammern und zur Kommunikation mit dem Flugzeug aufweist.

4. Anordnung nach Anspruch 3, **dadurch gekennzeichnet, dass** mindestens Teile der ersten und zweiten Seitenwand der ersten Öffnung verdoppelt sind.

5. Anordnung nach Anspruch 3 oder 4, **dadurch gekennzeichnet, dass** die erste und zweite Seitenwand der ersten Öffnung Schultern aufweisen, die so angeordnet sind, dass sie zueinander vorspringen.

6. Anordnung nach einem der Ansprüche 3 bis 5, **dadurch gekennzeichnet, dass** der gemeinsame Bodenabschnitt der ersten und zweiten Öffnung mit doppelter Wandung ausgeführt ist.

## Revendications

1. Procédé de production d'un agencement destiné au stockage et au lancement de contre-mesures, tels que des fusées éclairantes et des paillettes, comprenant un corps allongé avec des compartiments destinés aux contre-mesures, et des moyens destinés à alimenter en signaux de mise à feu les contre-mesures dans les compartiments et à communiquer avec l'aéronef sur lequel l'agencement est projeté d'être monté, **caractérisé en ce que** :
a) une traverse, profilée essentiellement en forme de H, est formée sur une longueur appropriée par extrusion en partant d'un matériau pouvant être extrudé, le projectile en forme de H étant extrudé soit directement, soit sous forme de deux profils symétriques essentiellement en forme de T, lesquels, après extrusion, sont joints pour former un profil en forme de H ;
b) une pointe avant est agencée à une extrémité de la traverse ;
c) une queue est agencée à l'autre extrémité de la traverse ;
d) des compartiments, destinés au stockage des contre-mesures, sont agencés dans une ouverture du profil en forme de H ;
e) des moyens, destinés à alimenter en signaux de mise à feu les contre-mesures dans les compartiments et à communiquer avec l'aéronef, sont agencés dans l'autre ouverture du profil en forme de H.

2. Procédé selon la revendication 1, **caractérisé en ce que** la traverse est formée par extrusion en partant de métal, par exemple de l'aluminium.

3. Agencement destiné au stockage et au lancement de contre-mesures, telles que des fusées éclairantes et des paillettes, comprenant un corps allongé avec des compartiments destinés aux contre-mesures, et des moyens destinés à alimenter en signaux de mise à feu les contre-mesures dans les compartiments et à communiquer avec l'aéronef ou autre appareil semblable sur lequel l'agencement est projeté d'être monté, **caractérisé en ce que** l'agencement comprend une traverse formée par extrusion d'un matériau pouvant être extrudé, et profilée essentiellement en forme de H, avec une première ouverture délimitée par une première paroi latérale et une deuxième paroi latérale opposées, et une section de fond, et une seconde ouverture opposée, délimitée par une troisième paroi latérale et une quatrième paroi latérale opposées, et la section de fond commune à la première ouverture, une pointe avant agencée à une extrémité de la traverse, et une queue agencée à l'autre extrémité de la traverse, laquelle traverse comprend, dans la première ouverture du profil en forme de H, une pluralité de compartiments destinés au stockage des contre-mesures, et laquelle traverse, dans l'autre ouverture du profil en forme de H projeté d'être agencé sur l'aéronef ou autre appareil semblable, comprend des moyens destinés à alimenter en signaux de mise à feu les contre-mesures dans les compartiments et à communiquer avec l'aéronef.

4. Agencement selon la revendication 3, **caractérisé en ce que** des parties au moins de la première paroi latérale et de la deuxième paroi latérale de la première ouverture sont doublées.

5. Agencement selon l'une quelconque des revendications 3 et 4, **caractérisé en ce que** la première paroi latérale et la deuxième paroi latérale de la première ouverture comprennent des épaulements agencés en saillant les uns vers les autres.

6. Agencement selon l'une quelconque des revendications 3 à 5, **caractérisé en ce que** la section de fond commune de la première ouverture et de la seconde ouverture est conçue avec des parois doubles.
